# EUROPEAN PATENT SPECIFICATION

(11) **EP 1 154 131 B1**
(45) Date of publication and mention of the grant of the patent: **23.02.2005**
(21) Application number: 01106515.8
(22) Date of filing: 14.03.2001
(51) Int. Cl.: F01N 11/00, F02D 41/02, F02D 41/40

(54) **Exhaust gas purifying device for internal combustion engine**
Vorrichtung zur Reinigung des Abgases einer Brennkraftmaschine
Dispositif de purification des gaz d'échappement d'un moteur à combustion interne

(30) Priority: 16.03.2000 JP 2000074747
(43) Date of publication of application: 14.11.2001
(73) Proprietor: Mazda Motor Corporation, Aki-gun, Hiroshima (JP)
(72) Inventor: Kataoka, Motoshi, Aki-gun, Hiroshima (JP); Waranabe, Tomomi, Aki-gun, Hiroshima (JP); Hayashibara, Hiroshi, Aki-gun, Hiroshima (JP); Takami, Akihide, Aki-gun, Hiroshima (JP); Kobayashi, Akihiro, Aki-gun, Hiroshima (JP)
(74) Representative: Zinnecker, Armin, Dipl.-Ing.

(56) References cited:
- EP-A- 0 947 683
- EP-A- 0 952 320
- EP-A- 1 052 385
- US-A- 5 133 184
- PATENT ABSTRACTS OF JAPAN vol. 016, no. 253 (M-1263), 9 June 1992 (1992-06-09) & JP 04 060106 A (MAZDA MOTOR CORP), 26 February 1992 (1992-02-26)

## Description

The present invention relates to an exhaust gas purifying device for an internal combustion engine.

One technique of making a diagnosis of operating condition of an exhaust gas purifying catalyst is disclosed in earlier filed European patent application, published as EP 1 052 385. Another one is disclosed in, for example, U.S. patent No. 5,133,184. In the latter, a diagnosis of operating condition is performed on the basis of a change in catalyst temperature while supplying an unbumed mixture gas to a catalyst by causing an internal combustion engine to misfire. The catalyst temperature is monitored by detecting a temperature of an exhaust gas before and after the catalyst by temperature sensors disposed before and after the catalyst in an exhaust passage. On the basis of the fact that, while the catalyst works normally, exhaust gas passing through the catalyst raises its temperature due to a chemical reaction and, in consequence, the exhaust gas temperature is different before and after the catalyst, a large amount of unburned mixture gas is supplied to the catalyst so as to increase the temperature difference of exhaust gas in order to make an easy diagnosis of operating condition of the catalyst.

Since the diagnostic technique disclosed in U.S, patent No. 5,133,184 raises the diagnostic accuracy by increasing an amount of unburned mixture gas supplied to a catalyst, the purification of exhaust gas is temporarily insufficient In addition, since it is necessary for the internal combustion engine to misfire, the diagnosis of operating condition of the catalyst must be made during a particular engine operating condition such as deceleration.

It is therefore an object of the present invention to provide an exhaust gas purifying device for an internal combustion engine which can perform a precise diagnosis of operating condition of a catalyst without supplying a large amount of unburned mixture gas to the catalyst.

It is another object of the present invention to provide an exhaust gas purifying device for an internal combustion engine which performs a diagnosis of operating condition of a catalyst without causing the internal combustion engine to misfire.

It is still another object of the present invention to provide an exhaust gas purifying device for an internal combustion engine which realizes sufficient purification of exhaust gas during a diagnosis of operating condition of a catalyst.

It is a further object of the present invention to provide an exhaust gas purifying device for an internal combustion engine which reduces smoke content of exhaust gas.

According to the exhaust gas purifying device of the present invention, the above objects are accomplished by controlling properly a timing of post fuel injection. Specifically, the exhaust gas purifying device for an internal combustion engine which comprises a fuel injector which injects fuel directly into a combustion chamber of the internal combustion engine, an exhaust system with a catalyst having an oxidation catalyzing function of purifying exhaust gas from the internal combustion engine, a temperature sensor operative to monitor a temperature of the catalyst, reduction substance increasing means for increasing an amount of reduction substance in exhaust gas by implementing post fuel injection at a specified point of time in a expansion stroke or an exhaust stroke following main fuel injection timed neat a top dead center (TDC) of a compression stroke comprises diagnostic means for implementing the post fuel injection and making a diagnosis of operational normality or abnormality of either one of the catalyst and the reduction substance increasing means on the basis of a change in the catalyst temperature caused from the post fuel injection while the internal combustion engine operates under a specified operating condition, wherein a timing of the post fuel injection for making the diagnosis of operational normality or abnormality is set at a rotational angle of crankshaft (CA) between 30° and 210° after TDC of the compression stroke.

Since the diagnosis of operational normality or abnormality of the catalyst is performed by monitoring a change in catalyst temperature when a reduction substance content of exhaust gas is risen by implementing the post fuel injection, the diagnosis of operational normality or abnormality of the catalyst can be always implemented as long as the internal combustion engine is under an operating condition for fuel supply. This makes it unnecessary for, for example, an gasoline engine to misfire. Further, the post fuel injection timing is set between 30° CA and 210° CA after TDC of a compression stroke, so that the amount of post fuel injection does not have to be so large in order to make the diagnosis of operational normality or abnormality of the catalyst. That is, when implementing the post fuel injection in order to make the diagnosis of operational normality or abnormality of the catalyst, the reduction substance content of exhaust gas becomes greater as compared with that before the implementation of the post fuel injection while the reduction substance increasing means works normally and the increased reduction substance is oxidized while the catalyst works normally. As a result of which, the catalyst raises its temperature. It is determined from a rising degree of catalyst temperature whether either one of the reduction substance increasing means and the catalyst is operationally abnormal. In the event where a rising degree of catalyst temperature due to the post fuel injection is small, it becomes hard to judge whether either the reduction substance increasing means or the catalyst is operationally abnormal.

According to a study by the inventors of the present application, it has been proved that a rise in catalyst temperature due to the post fuel injection can be increased by setting the post fuel injection timing between 30° CA and 210° CA after TDC of a compression stroke. In light of the fact, the diagnosis of operational normality or abnormality of the catalyst is performed with high precision notwithstanding no increase in the amount of post fuel injection, so that the catalyst is prevented from causing aggravation of purifying efficiency. When advancing the post fuel injection from 30° CA, a proportion of combustion in the combustion chamber of fuel that is provided by the post fuel injection increases. As a result, the engine provides output torque increased in excess and, in addition, a decreased amount of unburned mixture gas acting as a reduction substance supplied to the catalyst. Further, when retarding the post fuel injection from 210° CA, the catalyst causes a large drop in temperature, so as to be disadvantageous to oxidation purifying of exhaust gas by the reduction substance.

The timing of the post fuel injection for making the diagnosis of operational normality or abnormality of the catalyst may be at a rotational angle of crankshaft between 30° CA and 60° CA after TDC of a compression stroke. This is advantageous to a diesel engine in view of smoke control.

Further, in the case where the timing of the post fuel injection for making the diagnosis of operational normality or abnormality of the catalyst is at a rotational angle of crankshaft between 30° CA and 90° CA after TDC of the compression stroke, the post fuel injection may be implemented at injection intervals of 0.2 to 2 seconds. The amount of main fuel injection that is implemented near TDC of a compression stroke must be smaller during an engine operation with a load lower than a specific value as compared with during an engine operation with a load higher than the specific value, and the amount of post fuel injection must be small in order to avoid an increase in engine output torque in excess. In such a case, when implementing the post fuel injection once every main fuel injection, the amount of every post fuel injection is small. This makes it hard to control of the amount of post fuel injection. However, according to the exhaust gas purifying device of the present invention, since the interval of post fuel injection is comparatively long, the amount of every post fuel injection can be increased. This is advantageous to the diagnosis of operational normality or abnormality of the catalyst. According to a study by the inventors of the present application, it has been proved that, while the catalyst walks normally, the catalyst is provided with a tendency to make a raising degree of temperature greater when the post fuel injection interval is made long than when it is short This tendency is advantageous to the diagnosis of operational normality or abnormality of the catalyst. When making the post fuel injection interval longer than two seconds, the amount of post fuel injection is increased, so as to cause the engine to cause an undesirable change in output torque.

In the event where the engine operates at a speed of 1500 rpm, the post fuel injection occurs once every 10 main fuel injection when implemented at mtervals of 0.2 seconds and once every 100 main fuel injection when implemented at intervals of 2 seconds.

When setting the timing of post fuel injection for making the diagnosis of operational normality or abnormality between 50° CA and 90° CA after TDC of a compression stroke, the catalyst is provided with a tendency to increase a raising degree of temperature when the post fuel injection interval is long.

In the case where the post fuel injection is implemented at intervals of 0.2 seconds to 2 seconds, the timing of post fuel injection may be between 50° CA and 90° CA after TDC of a compression stroke. This causes the catalyst to raise its temperature at an increased degree, which is advantageous to the diagnosis of operational normality or abnormality of the catalyst According to a study by the inventors of the present application, it has been proved that the timing of post fuel injection set between 50° CA and 90° CA does not provide an increase in the reduction substance content of exhaust gas that passes though the catalyst without being accompanied by an effect of purification. This is advantageous to purification of exhaust gas.

In the case where the timing of post fuel injection for making the diagnosis of operational normality or abnormality is between 60° CA and 210° CA after TDC of a compression stroke and is implemented at post fuel injection intervals between 0.2 seconds and two seconds, the exhaust system includes another catalyst having an oxidation catalyzing function of purifying exhaust gas from the internal combustion engine, which is disposed downstream from the catalyst. In this instance, even though a reduction substance is supplied to and partly passes through the upstream catalyst whose operational normality or abnormality is diagnosed without being purified, it is effectively oxidized by the downstream catalyst, so as to be lowered in emission level.

Catalysts which are employable as the catalyst having an oxidation catalyzing function include, in addition to oxidation catalysts and three-way catalysts, a NOx purifying catalysts carrying a noble metal or Cu which reduces NOx by reaction of HC in a partly oxidized state with the NOx.

In the case where the timing of the post fuel injection for making the diagnosis of operational normality or abnormality is between 60° CA and 210° CA after TDC of the compression stroke, the post fuel injection may be implemented at post fuel injection intervals shorter than 0.2 seconds. When the post fuel injection interval becomes shorter, the amount of every post fuel injection becomes correspondingly smaller, so that reduction substance is supplied to the catalyst little by little. As a result, the catalyst can efficiently purify the reduction substance. This is advantageous to a rise in catalyst temperature for the diagnosis of operational normality or abnormality of the catalyst and to lowering an emission level of an unpurified reduction substance. When shortening the post fuel injection interval, the reduction substance purification efficiency is significantly increased when the post fuel injection is implemented at a timing between 60° CA and 210° CA after TDC of the compression stroke.

As described above, according to the exhaust gas purifying device of the present invention which performs the diagnosis of operational normality or abnormality of the catalyst or the reduction substance increasing means on the basis of a change in catalyst temperature that is caused by an increase in the amount of reduction substance content of exhaust gas due to implementation of the post fuel injection, the rising degree of catalyst temperature is made great without particularly increasing the amount of post fuel injection for making the diagnosis of operational normality or abnormality of the catalyst, which is advantageous to improvement of diagnostic precision. This is realized by setting the post fuel injection timing between 30° CA and 210° CA after TDC of a compression stroke.

Implementing the post fuel injection at a timing set between 30° CA and 60° CA after TDC of a compression stroke provides the advantage of lowering an emission level of smoke of a diesel engine. When implementing the post fuel injection at a timing set between 30° CA and 90° CA after TDC of a compression stroke and at 0.2- to two-second intervals, the amount of every post fuel injection is increased and the catalyst raises its temperature at an increased rate while it works normally. This is advantageous to the diagnosis of operational normality or abnormality of the catalyst. When implementing the post fuel injection at a timing set between 50° CA and 90° CA after TDC of a compression stroke at 0.2- to two-second intervals, the catalyst raises its temperature at an increased rate while it works normally. This is further advantageous to the diagnosis of operational normality or abnormality of the catalyst and purification of exhaust gas. In the case where a subsidiary catalyst having an oxidation catalyzing function is additionally disposed downstream from the catalyst, when implementing the post fuel injection at a timing set between 30° CA and 90° CA after TDC of a compression stroke at 0.2- to two-second intervals, even though a reduction substance is supplied to and partly passes through the catalyst without being purified, it is effectively oxidized by the subsidiary catalyst, so as to be lowered in emission level. Further, implementing the post fuel injection at a timing set between 60° CA and 210° CA after TDC of a compression stroke at intervals shorter than 0.2 seconds provides the advantage of increasing catalyst temperature necessary for the diagnosis of operational normality or abnormality of the catalyst and preventing an unpurified reduction substance from being discharged into the atmosphere.

The above and other objects and features of the present invention will be clearly understood from the following description with respect to the preferred embodiments thereof when considered in conjunction with the accompanying drawings, in which:
Figure 1 is a schematic illustration showing a control system installed to an internal combustion engine in accordance with an embodiment of the present invention;
Figure 2 is a schematic view of a catalytic converter;
Figure 3 is a flow chart illustrating a sequence routine of fuel injection control;
Figure 4 is a graphical illustration showing the relationship between inlet catalyst temperature and post fuel injection timing and the relationship between outlet catalyst temperature and post fuel injection timing, both after 10 seconds from a start of post fuel injection;
Figure 5 is a graphical illustration showing the relationship between inlet catalyst temperature and post fuel injection timing and the relationship between outlet catalyst temperature and post fuel injection timing, both after 30 seconds from a start of post fuel injection;
Figure 6 is a graphical illustration showing the relationship between inlet catalyst temperature and post fuel injection timing and the relationship between outlet catalyst temperature and post fuel injection timing, both after 90 seconds from a start of post fuel injection;
Figure 7 is a graphical illustration showing the relationship between an amount of smoke and post fuel injection timing when post fuel injection is implemented once every main fuel injection;
Figure 8 is a graphical illustration showing the relationship between an amount of HC and post fuel injection timing when post fuel injection is implemented once every main fuel injection;
Figure 9 is a graphical illustration showing the relationship between an amount of HC before catalyst and post fuel injection timing and the relationship between an amount of HC after catalyst and post fuel injection timing, both after 10 seconds from a start of post fuel injection;
Figure 10 is a graphical illustration showing the relationship between an amount of HC before catalyst and post fuel injection timing and the relationship between an amount of HC after catalyst and post fuel injection timing, both after 30 seconds from a start of post fuel injection;
Figure 11 is a graphical illustration showing the relationship between an amount of HC before catalyst and post fuel injection timing and the relationship between an amount of HC after catalyst and post fuel injection timing, both after 90 seconds from a start of post fuel injection; and
Figure 12 is a graphical illustration showing the relationship between post fuel injection and temperature of upstream catalyst.

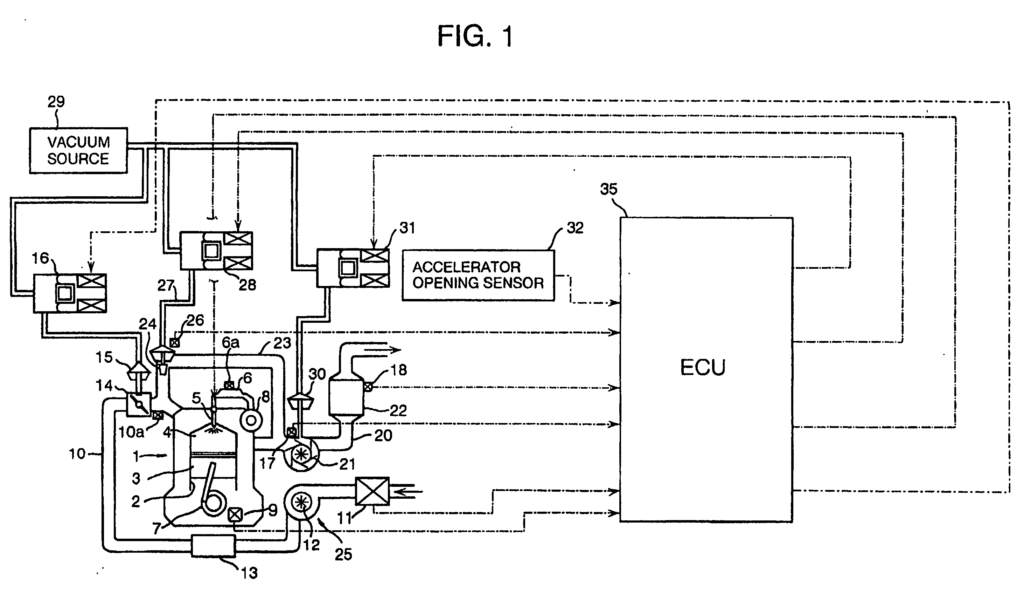

Referring to the drawings in detail, and, in particular, to Figure 1, an exhaust gas purifying device A according to a preferred embodiment of the present invention is shown as installed to an internal combustion engine such as, for example, a multi-cylinder diesel engine having an engine body 1. The engine body 1 has a plurality of cylinders 2 (only one of which is shown) in which pistons 3 are received to slide up and down. A combustion chamber 4 is defined between each of the cylinder 2 and the piston 3. The combustion chamber 4 at a top center is provided with a fuel injector 5 with an injection nozzle facing the combustion chamber 4. The fuel injectors 5 are controlled independently from one another to open and close at a specified timing so as to inject a given amount of fuel directly into the combustion chamber 4. The fuel injectors 5 are connected to a common rail 6 as an accumulator to accumulate pressurized fuel therein. The common rail 6 is coupled to a high pressure fuel pump 8 which is driven by a crankshaft 7 of the diesel engine. The high pressure fuel pump 8 operates so as to keep the fuel in the common rail 6 at a specified pressure. The common rail 6 is accompanied by a pressure sensor 6a operative to monitor a pressure of the fuel in the common rail 6 (which is hereafter referred to as a common rail pressure). The pressure sensor 6a is known in various forms in the art and may take any known form. The engine body 1 is provided with an angle sensor 9 operative to monitor a rotational angle of the crankshaft 7. The angle sensor 9 is known in various forms in the art and may take any known form. For example, the angle sensor 9 may comprises a rotary plate secured to the crankshaft 7 and an electromagnetic pickup disposed oppositely to the periphery of the rotary plate. The rotary plate is formed with projections arranged on the periphery at regular angular intervals. The electromagnetic pickup generates pulse signals one every time it is spatially crossed by the projection.

The diesel engine has an intake passage 10 through which intake air is introduced and supplied into the combustion chamber 4 of the diesel engine via an air cleaner (not shown). The intake passage 10 at a downstream end is branched off from a surge tank (not shown) and is connected respectively to the combustion chambers 4 of the cylinders 2 through intake ports. A charging pressure sensor 10a is provided in order to detect a supercharging pressure in the inside of the surge tank that is supplied to the respective cylinders 2. The intake passage 10 is further provided, in order from the upstream end to the downstream end, with a hot film type of air flow sensor 11 operative to detect an amount of fresh intake air which is introduced into the intake passage 10, a blower 12 which is driven by a turbine 21 of a turbocharger 25 to compress intake air, an intercooler 13 operative to cool down the intake air that is compressed by the blower 12, and an intake throttle valve 14 as means operative to lower the amount of fresh intake air by reducing a cross-sectional area of the intake passage 10. The intake throttle valve 14 is of a type comprising a butterfly valve which has a notch so as to admit intake air therethrough even while it is fully closed. Similarly to an exhaust gas recirculation (EGR) valve 24 accompanied by a lift sensor 26 which will be described later, the intake throttle valve 14 is controlled to change its opening by controlling the level of negative pressure acting on a diaphragm 15 by an electromagnetic valve 16 for negative pressure control. A sensor is provided to detect an opening of the intake throttle valve 14.

Denoted by a reference numeral 20 is an exhaust passage into which exhaust gas is discharged from the combustion chamber 4 of each cylinder 2. The exhaust passage 20 at the upstream end is branched off and connected to the combustion chambers 4 of the cylinders 2 through exhaust ports and is provided, in order from the upstream end to the downstream end, with the turbine 21 which is driven by an exhaust gas flow, a catalytic converter 22 capable of lowering emission levels of HC, CO and NOx and particulate in exhaust gas so as thereby to purify the exhaust gas, and an oxygen (O₂) sensor 17 operative to detect the oxygen concentration of exhaust gas in the exhaust passage 20. The catalytic converter 22 is accompanied by a temperature sensor 18 operative to monitor catalyst temperature.

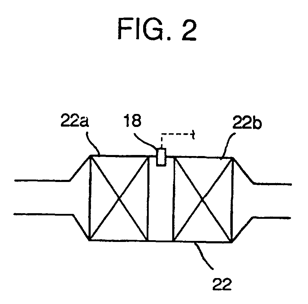

As shown in Figure 2, the catalytic converter 22 is of a type comprising two catalysts namely an oxidation catalyst 22a and a NOx purifying catalyst 22b arranged in line. The oxidation catalyst 22a is disposed at an upstream side of the catalytic converter 22. The NOx purifying catalyst 22b is disposed as a subsidiary catalyst at a downstream side of the catalytic converter 22. The temperature sensor 18 is positioned between the oxidation catalyst 22a and the NOx purifying catalyst 22b. Each of these catalysts 22a and 22b is formed as a catalyst layer formed on wall surfaces of a number of pours or holes of a cordierite honeycomb substrate which are arranged in parallel to one another in an axial direction (the same direction of an exhaust gas flow). Specifically, the catalyst layer of the oxidation catalyst 22a is formed by coating catalyst powder carrying platinum (Pt) supported by alumina and ceria on the cordierite honeycomb substrate with a binder. The catalyst layer of the NOx purifying catalyst 22b is formed by coating catalyst powder carrying platinum (Pt) supported by zeolite on the cordierite honeycomb substrate with a binder. The NOx purifying catalyst 22b functions as a reduction purifying catalyst that decreases NOx in an exhaust gas resulting from combustion of a lean fuel mixture having an air-fuel ratio ***A*/*F*** higher than a stoichiometric air-fuel ratio (e.g. ≧ 18) and also works as a three-way catalyst at air-to-fuel ratios ***A*/*F*** close to the stoichiometric air-to-fuel ratio.

The exhaust passage 20 at the upstream from the turbine 21 is branched off and connected to an exhaust gas recirculation (EGR) passage 23 through which exhaust gas is partly recirculated into the intake stream. The exhaust gas recirculation passage 23 at the downstream end is connected to the intake passage 10 at a further downstream side relative to the intake throttle valve 14. The exhaust gas recirculation passage 23 at a point close to the downstream end is provided with the exhaust gas recirculation valve 24 which is operated by negative pressure to adjust its opening so as to admit partly the exhaust gas into the intake passage 10 from the exhaust passage 20. The exhaust gas recirculation valve 24 has a valve box with a vacuum chamber connected to a vacuum passage 27. The vacuum passage 27 is connected to a vacuum pump (pressure source) 29 through an electromagnetic valve 28 operative to control negative pressure. The electromagnetic valve 28 receives a control signal (electric current) from an engine control unit (ECU) 35 to open and shut the vacuum passage 27, so as thereby to operating pressure in the vacuum chamber of the exhaust gas recirculation valve 24, linearly regulating an opening of the exhaust gas recirculation passage 23.

The turbocharger 25, which is of a variable geometric type comprising the turbine 21 and the blower 12, is provided with a diaphragm 30. The sectional area of the exhaust passage 20 is regulated by controlling a negative pressure on the diaphragm 30 by an electromagnetic valve 31 operative to control negative pressure.

The engine control unit 35 receives signals from various sensors including at least the pressure sensor 6a, the angle sensor 9, the pressure sensor 10a, the air flow sensor 11, the O2 sensor 17, the temperature sensor 18, the lift sensor 26 and an accelerator travel sensor 32 for detecting a travel of an accelerator pedal (not shown), respectively.. The engine control unit 35 provides various control signals in accordance with an engine operating condition and temperatures of the catalysts 22a and 22b for controlling the fuel injector 5, the high-pressure supply pump 8, the intake throttle valve 14, the exhaust gas recirculation valve 24, the turbocharger 25. Specifically, the fuel injector 5 is controlled in operation so as to inject a controlled amount of fuel at a controlled timing. The high-pressure supply pump 8 is controlled in operation to regulate common rail pressure, i.e. fuel injection pressure, The intake throttle valve 14 is controlled in operation to regulate an amount of intake air. The exhaust gas recirculation valve 24 is controlled in operation to regulate an amount of exhaust gas that is recirculated. Further, the turbocharger 25 is controlled in operation to compress intake air.

The engine control unit 35 electrically stores a fuel injection control map of optimum amounts of fuel injection ***Qb*** which is empirically determined in accordance with changes in target engine output torque and engine speeds of rotation in a memory thereof. The optimum amount of fuel injection ***Qb*** is defined so as to increase as the engine speed of rotation becomes higher and as the travel of accelerator becomes larger. An amount of main fuel injection ***Qb*** is read out in accordance with a target engine output torque, which is determined on the basis of an accelerator travel detected by the accelerator travel sensor 32, and an engine speed of rotation, which is determined on the basis of a rotation angle of crankshaft detected by the angle sensor 9, from the fuel injection control map. A pulse width, which is a measurement of how long the fuel injector to open, is determined on the basis of the amount of main fuel injection ***Qb*** and a common rail pressure detected by the pressure sensor 6a for each fuel injector 5. The control of main fuel injection supplies a demanded amount of fuel meeting the target engine output torque so as to provide a mean air-fuel ratio in the combustion chamber 4 (which is hereafter referred to as a mean combustion chamber air-fuel ratio) which is comparatively lean (≧ 18). While the diesel engine operates in an ordinary operating condition, in other words, while the diesel engine operates at a small accelerator travel, in order to supply a component of reduction substance to the NOx purifying catalyst 22b for accelerating progress of reduction purifying of NOx, post fuel injection is carried out to inject a small amount of fuel according to a temperature of the NOx purifying catalyst 22b on either an expansion stroke or an exhaust stroke after the main fuel injection in addition to retarding the main fuel injection.

During in a period of engine operation from an engine start to an engine stop, the oxidation catalyst 22a is monitored once or twice to make a diagnosis of deterioration. The diagnosis of deterioration of the oxidation catalyst 22a is implemented while supplying a somewhat large amount of reduction substance to the oxidation catalyst 22a during ordinary operation of the diesel engine. When a rising degree of catalyst temperature such as a change in catalyst temperature or a changing rate of catalyst temperature becomes larger than a specified value in a specified period of time from a start of supplying an increased amount of reduction substance or in a period of time for which an integrated amount of increased reduction substance reaches a specified value, the oxidation catalyst 22a is regarded as normal or as not deteriorated. On the other hand, when the rising degree of catalyst temperature remains lower than the specified value in that period of time, the oxidation catalyst 22a is regarded as abnormal or as deteriorated

The following description is directed to the control of injection timing and injection interval of the post fuel injection during monitoring deterioration of the oxidation catalyst 22a by which the exhaust gas purifying device of the present invention is characterized.

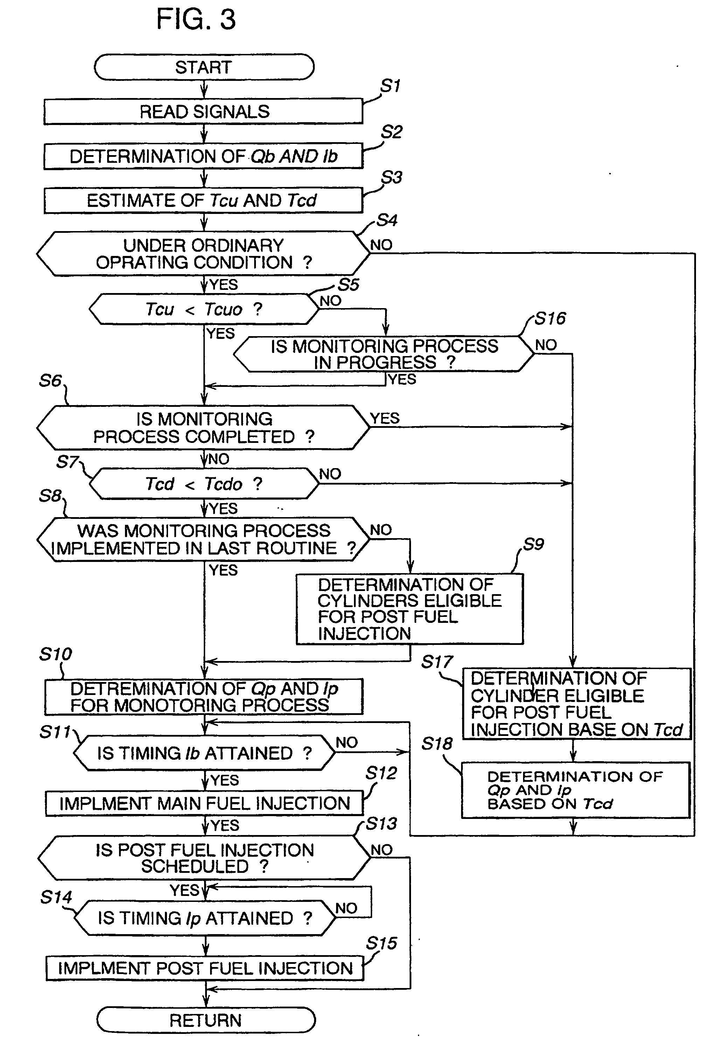

Figure 3 is a flow chart illustrating a sequence routine of post fuel injection control that is repeated every specified rotational angle of crankshaft. When the sequence logic commences and control proceeds to a block at step S to read various control parameters represented by signals from at least the pressure sensor 6a, the angle sensor 9, the air flow sensor 11, the temperature sensor 18 and the accelerator travel sensor 32. Subsequently, an amount of main fuel injection ***Qb*** and a timing of main fuel injection (main fuel injection timing) ***Ib*** are determined. As was previously described, the amount of main fuel injection ***Qb*** is experimentally defined with respect to changes in accelerator travel and engine speed of rotation in the fuel injection control map. The main fuel injection timing ***Ib*** is set at a point near TDC of a compression stroke. For example, the main fuel injection timing ***Ib*** is advanced more from a standard point, e.g. a rotational angle of crankshaft of 5° before TDC (before TDC 5° CA), as the amount of main fuel injection ***Qb*** becomes larger or is retarded more from the standard point as the amount of main fuel injection ***Qb*** becomes smaller. Further, the main fuel injection timing ***Ib*** is retarded according to a temperature of engine cooling water while the temperature of engine cooling water is low Thereafter, at step S3, a temperature of exhaust gas is detected by the temperature sensor 18 to estimate catalyst temperatures ***Tcu*** and ***Tcd*** of the oxidation catalyst 22a and the NOx purifying catalyst 22b, respectively. The exhaust temperature is substituted for the catalyst temperature ***Tcu*** of the oxidation catalyst 22a. The exhaust temperature is modified by a coefficient smaller than 1 (one) or by a certain decrement for the catalyst temperature ***Tcd*** of the NOx purifying catalyst 22b. A temperature sensor may be additionally disposed after the NOx purifying catalyst 22b so as to detect a temperature of exhaust gas for an estimate of catalyst temperature ***Tcd*** of the NOx purifying catalyst 22b.

After the estimate of catalyst temperatures ***Tcu*** and ***Tcd*,** it is judged through steps S4 to S7 as to whether all of monitoring conditions are satisfied. The conditions which should be satisfied for monitoring deterioration of the oxidation catalyst 22a are such that the diesel engine is under an ordinary operating condition, that the upstream side catalyst, i.e. the oxidation catalyst 22a, is in a specified low temperature state, that the monitoring process for the diagnosis of deterioration has been completed and that the downstream side catalyst, i.e. the NOx purifying catalyst 22b, is at a catalyst temperature ***Tcd*** lower than a specified value. Specifically, a judgement is made at step S4 as to whether a change in accelerator travel is less than a specified value, in other words, whether the diesel engine is operating in an ordinary condition. In the event where a change in accelerator travel represented by a signal from the accelerator travel sensor 32 is less than the specified value, the diesel engine is regarded as being under ordinary operating condition. On the other hand, in the event where a change in accelerator travel represented by a signal from the accelerator travel sensor 32 is greater than the specified value, the diesel engine is regarded as being under transitional operating condition such as accelerateive operating condition. The diagnosis of deterioration of the oxidation catalyst 22b is performed by monitoring a rising degree of the catalyst temperature ***Tcu*** of the oxidation catalyst 22a caused due to post fuel injection In consequence, since, during acceleration, a change in the catalyst temperature ***Tcu*** of the oxidation catalyst 22a is caused resulting from a rise in the amount of fuel injection, the diagnosis of deterioration of the oxidation catalyst 22a is not implemented. Further, since, during deceleration or idling, the amount of fuel injection is decreased, it is undesirable to implement the post fuel injection, the diagnosis of deterioration of the oxidation catalyst 22a is not implemented.

In the event where the diesel engine is under an ordinary operating condition, a judgement is made at step S5 as to whether the oxidation catalyst 22a is at a catalyst temperature ***Tcu*** lower than a threshold temperature ***Tcuo*** of, for example, 27-C. Because, in the event where the upstream side catalyst, i.e. the oxidation catalyst 22a, is at a catalyst temperature ***Tau*** higher than the threshold temperature ***Tcuo***, it is hard to realize accurate detect ion of a rising degree of temperature even when implementing the post fuel injection, the diagnosis of deterioration is not implemented. In this instance, in order for the oxidation catalyst 22a to raise temperature resulting from the post fuel injection, the oxidation catalyst 22a is required to be at a catalyst temperature ***Tcu*** higher than its active temperature of, for example, 150°C. When the catalyst temperature ***Tau*** is still lower than the threshold temperature ***Tauo****,* a decision is made at step S6 as to whether the monitoring process for the diagnosis of deterioration has been completed. When the monitoring process has not yet been completed, then, another judgement is made at step S7 as to whether the catalyst temperature ***Tcd*** of the NOx purifying catalyst 22b is lower than threshold temperature ***Tcdo***. That is, when the downstream side catalyst, i.e. the NOx purifying catalyst 22b, reaches the threshold temperature ***Tcdo***, it provides a great decrease in NOx conversion efficiency. Accordingly, in such an event, the control of fuel injection is performed so as to provide an increase in NOx conversion efficiency by avoiding implementation of the monitoring process for the diagnosis of deterioration. When the catalyst temperature ***Tcd*** is still lower than the threshold temperature ***Tcdo***, a decision is made at step S8 as to whether the monitoring process for the diagnosis of deterioration was implemented in the last routine of the control of fuel injection, in other words, whether the monitoring process commences in the present routine of the control of fuel injection. When the monitoring process starts for the first time in the present routine, one or more of the cylinders for which the post fuel injection is implemented is judged at step S9. This is because, when the amount of main fuel injection ***Qb*** is large while the engine load is high, i.e. while the accelerator travel is large. In consequence, since the amount of post fuel injection can be increased, the post fuel injection is implemented following every one main fuel injection for each of the cylinders 2. However, since it is impossible to increase the amount of post fuel injection when the engine load falls, the post fuel injection is thinned out by extending post fuel injection intervals longer as the engine load changes smaller.

"Implementing the post fuel injection every one main fuel injection" refers to the fuel injection pattem that, in the event where the main fuel injection is implemented for the respective cylinders 2 in the firing order, the post fuel injection is implemented for every cylinder 2 following the main fuel injection. In this event, all of the cylinders 2 are judged as eligible for post fuel injection. "Thinning out the post fuel injection" refers to the fuel injection pattern that the post fuel injection is implemented once, for example, every five main fuel injection or every 25 main fuel injection For example, in the case where the firing order in a four cylinder engine having cylinders A - D is A, B, C, D, when the post fuel injection is implemented following the main fuel injection for the cylinder A, the post fuel injection is not implemented following the four subsequent main fuel injection for the cylinders B, C and D in the present round of firing and the cylinder A in the succeeding round of firing but is implemented following the main fuel injection for the cylinder B in the subsequence round of firing. In the event where the post fuel injection is implemented every five main fuel injection or every 25 main fuel injection, the cylinder judged as eligible for the post fuel injection changes in order of A, B, C, D every round of firing.

When all of the monitoring conditions are satisfied as a result of the judgements at steps S4 through 7, an amount of post fuel injection ***Qp*** which is used in the monitoring process for the diagnosis of deterioration and a timing of post fuel injection (post fuel injection timing) ***Ip*** are determined on the basis of the accelerator travel at step S10. When converting the amount of fuel injection ***Qp*** to an amount of fuel on the supposition that the post fuel injection is implemented for every cylinder 2, the amount of post fuel injection ***Qp*** is determined to be 1 to 7% of an amount of one main fuel injection ***Qb*.** Accordingly, when the post fuel injection is implemented once every five main fuel injection, the amount of each post fuel injection ***Qp*** is 5 to 35% of the amount of one main fuel injection ***Qb*.** In this instance, under low engine loads which are represented by accelerator travels less than a specified value, the post fuel injection is implemented once every five main fuel injection. However, under high engine loads which are represented by accelerator travels greater than the specified value, the post fuel injection is implemented once every one main fuel injection. The post fuel injection timing ***Tp***.*is* set at a point of time at which the piston reaches 30 to 90°, preferably 50 to 90° in rotational angle of crankshaft (CA) after TDC of its compression stroke in an engine operating condition of low engine load or to a point of time at which the piston reaches 60 to 120° CA after TDC of its compression stroke in an engine operating condition of high engine load.

Waiting attainment to the main fuel injection timing ***Ib*** at step S11, the main fuel injection is implemented for a relevant cylinder 2 at step S12. A judgement is subsequently made at step S13 as to whether the cylinder 2 is eligible for post fuel injection. When the cylinder 2 is judged as eligible for post furl injection, subsequently to attainment to the post fuel injection timing ***Ip*** at step S14, the post fuel injection is implemented for the cylinder at step S15. On the other hand, when the oxidation catalyst 22a is at a catalyst temperature ***Tcu*** higher than the threshold temperature ***Tcuo*** at step S5, a judgement is made at step S16 as to whether the monitoring process for the diagnosis of deterioration is in progress. In the event where the monitoring process for the diagnosis of deterioration is in progress, the sequence logic takes the process through steps S7 through S15 to implement the main fuel injection and/or the post fuel injection likely when the oxidation catalyst 22a is at a catalyst temperature ***Tcu*** lower than the threshold temperature ***Tcuo*** at step S5.

In the event where the monitoring process for the diagnosis of deterioration has been over at step s16, where the monitoring process for the diagnosis of deterioration has not yet been completed at step S7, or where the downstream catalyst, i.e. the NOx conversion catalyst 22b, is at a catalyst temperature ***Tcd*** of the NOx purifying catalyst 22b higher than the threshold temperature ***Tcdo***, it is determined based on the catalyst temperature ***Tcd*** which cylinder 2 is eligible for post fuel injection at step S17. Subsequently, an amount of post fuel injection ***Qp***, which is used to provide an increase in NOx conversion efficiency, and a post fuel injection timing ***Ip*** are determined on the basis of the catalyst temperature ***Tcd*** of the NOx purifying catalyst 22b at step S18.

After the determination of the amount of post fuel injection ***Qp*** and the post fuel injection timing ***Ip*** for use in the monitoring process for the diagnosis of deterioration at step S10 or for use in a process of increasing NOx conversion efficiency at step S18, or while the diesel engine is operating in an ordinary condition, the sequence logic takes a process through steps S11 to S15 in order to implement the main fuel injection and the post fuel injection at appropriate timings, respectively.

Regardless of implementing the monitoring deterioration of the oxidation catalyst 22a, feedback control of exhaust gas recirculation is implemented. Specifically, the exhaust gas recirculation valve 24 is feedback controlled on the basis of a value represented by a signal from the air flow sensor 11 so as to provide a target air-fuel ratio that is necessary to lower the amounts of NOx and smoke less than predetermined levels, respectively.

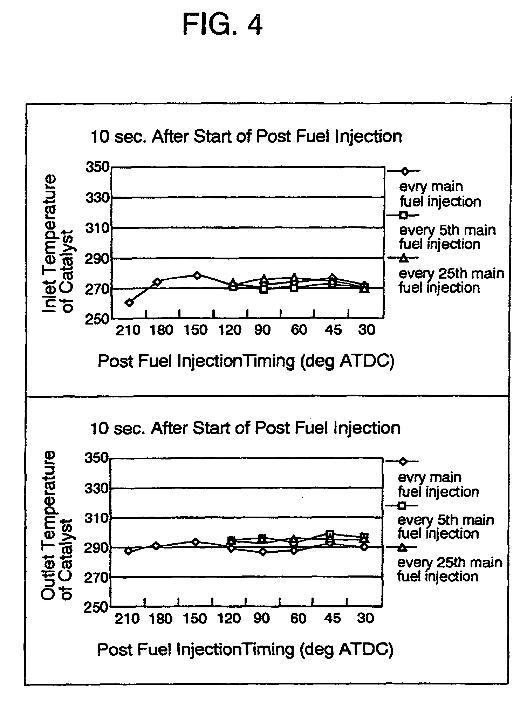

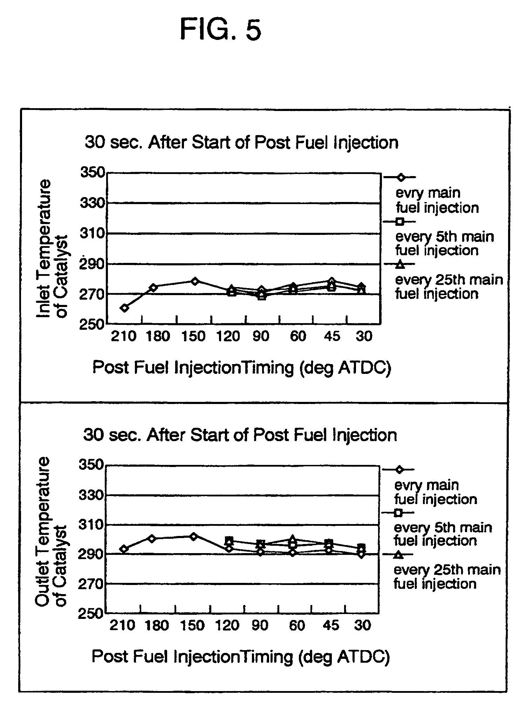

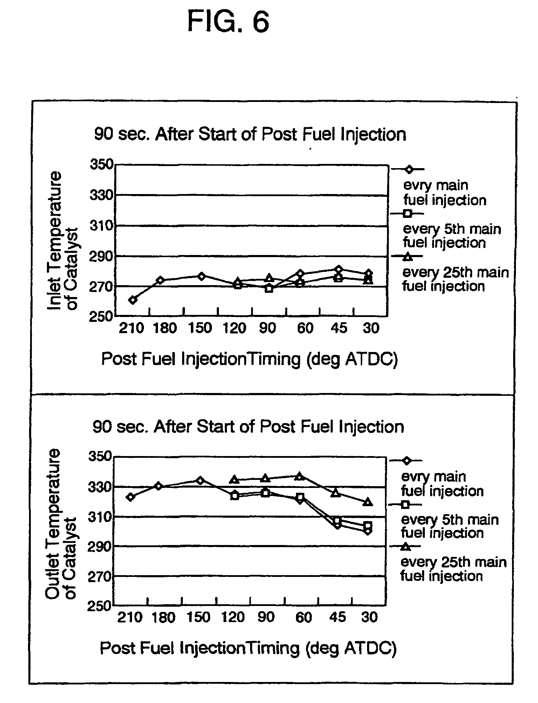

Figures 4 to 6 show the relationship between inlet catalyst temperature at a certain point of time after commencement of post fuel injection and post fuel injection timing and the relationship between outlet catalyst temperature at the certain point of time after commencement of post fuel injection and post fuel injection timing, when the post fuel injection is implemented once every one main fuel injection, every five fuel injection and every 25 main fuel injection, respectively, while the diesel engine operates at an engine speed of 1500 rpm. and a middle engine load. The inlet catalyst temperature and the outlet catalyst temperature are measurements at a point of time 10 seconds after commencement of post fuel injection in Figure 4, at a point of time 30 seconds after commencement of post fuel injection in Figure 5, and at a point of time 10 a point of time 90 seconds after commencement of post fuel injection in Figure 6.

As demonstrated in Figures 4 to 6, when setting the post fuel injection timing at a rotational angle of crankshaft between 30° and 210°, the catalyst temperature of the upstream catalyst, i.e. the oxidation catalyst 22a, rises significantly in any post fuel injection patterns. Accordingly, it is proved that it is easy to diagnose whether the upstream catalyst is functionally normal or whether the post fuel injection is implemented as scheduled. In particular, implementation of the post fuel injection once every 25 main fuel injection is advantageous to a rise in the catalyst temperature of the upstream catalyst. Further, even when setting the post fuel injection timing at a rotational angle of crankshaft between 30° and 90°, the catalyst temperature of the upstream catalyst, i.e. the oxidation catalyst 22a, shows a comparatively large degree of rise. It is also proved that a period of time for which a change in the catalyst temperature of the upstream catalyst is monitored is preferably longer than 60 seconds or more desirably longer than 90 seconds.

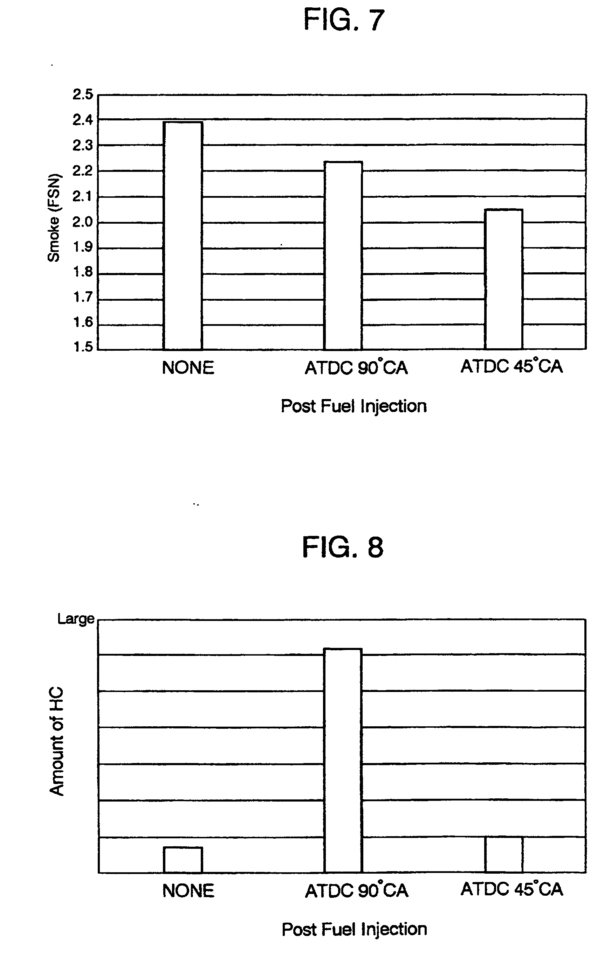

Figures 7 and 8 show the relationship between an amount of smoke and post fuel injection timing and the relationship between an amount of HC as an reduction substance and post fuel injection, respectively, when implementing the post fuel injection (through which 5% of an amount of fuel injected through the main fuel injection is injected) once every one main fuel injection while the diesel engine operates at an engine speed of 2000 rpm. and an engine load of 0.57 MPa without implementing exhaust gas recirculation. As apparent in Figure 7, it is proved that the amount of smoke is lowered when implementing the post fuel injection as compared with that when not implementing the post fuel injection. It is also proved that advancing the post fuel injection is advantageous to a decrease in the amount of smoke. The amount of NOx has the same tendency in connection with post fuel injection timing as smoke. Further, the amount of smoke has the same tendency in connection with post fuel injection timing in the case where the post fuel injection is implemented in other fuel injection patterns as in the fuel injection pattern in which the post fuel injection is implemented once every main fuel injection. As apparent in Figure 8, it is proved that advancing the post fuel injection is advantageous to a decrease in the amount of HC.

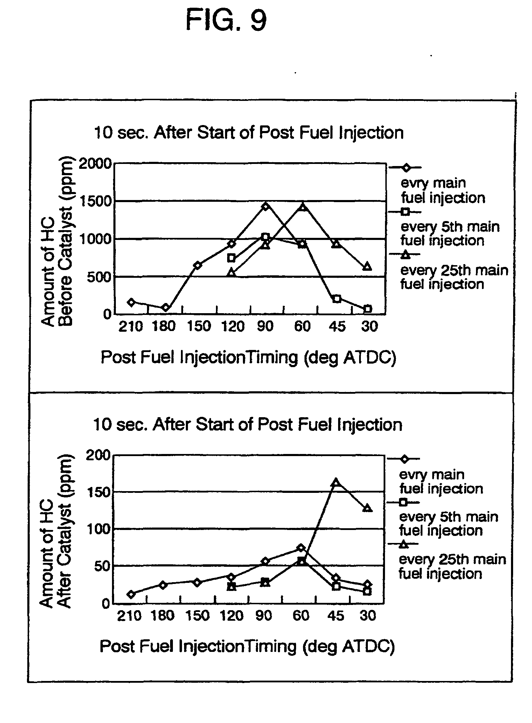

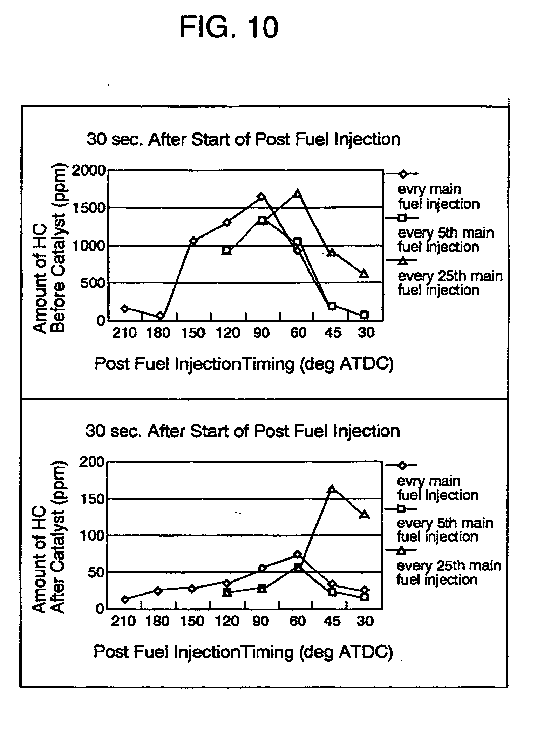

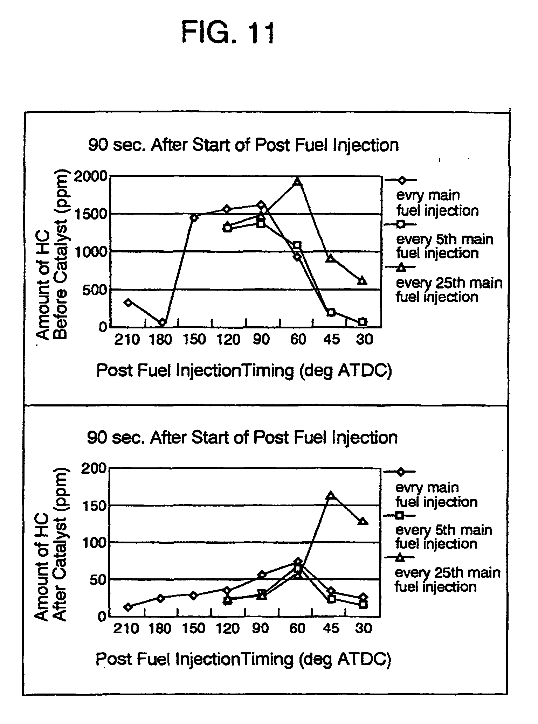

Figures 9 to 11 show the relationship between an amount of HC in incoming exhaust gas to the upstream catalyst, i.e. the oxidation catalyst 22a at a certain point of time after commencement of post fuel injection and post fuel injection timing and the relationship between an amount of HC in outgoing exhaust gas from the upstream catalyst at the certain point of time after commencement of post fuel injection and post fuel injection timing, when the post fuel injection is implemented once every one main fuel injection, every five fuel injection and every 25 main fuel injection, respectively, while the diesel engine operates at an engine speed of 1500 rpm. and a middle engine load. The amount of HC in incoming exhaust catalyst and the amount of HC in outgoing exhaust gas are measurements at a point of time 10 seconds after commencement of post fuel injection in Figure 9, at a point of time 30 seconds after commencement of post fuel injection in Figure 10, and at a point of time 10 a point of time 90 seconds after commencement of post fuel injection in Figure 11. The upstream catalyst (the oxidation catalyst 22a) is at an inlet temperature of approximately 270· C.

As demonstrated in Figures 9 to 11, in the case where the post fuel injection is implemented once every 25 main fuel injection, it is proved that the amount of HC that passes though the upstream catalyst, i.e. the oxidation catalyst 22a, without being accompanied by an effect of purification increases when the post fuel injection timing is set to a rotational angle of crankshaft less than 60° after TDC. Therefore, it is advantageous to a decrease in the amount of HC that passes through the upstream catalyst to set the post fuel injection timing to a rotational angle of crankshaft greater than 50° after TDC. As apparent in Figure 7, when it is desired to lower the amount of smoke together, it is preferred to set the post fuel injection timing to a rotational angle of crankshaft between 50° after TDC and 90° after TDC. As apparent in Figures 9 to 11, it is proved, when shortening the post fuel injection interval likely when implementing the post fuel injection once every main fuel injection or every five main fuel injection, the upstream catalyst, i.e. the oxidation catalyst 22a is improved in HC conversion efficiency when setting the post fuel injection timing to a rotational angle of crankshaft between 60° after TDC and 210° after TDC.

The following description will be directed to the post fuel injection control at steps S17 and S18 of the sequence routine shown in Figure 3 in the event where the monitoring process for the diagnosis of deterioration of the oxidation catalyst 22a is not implemented.

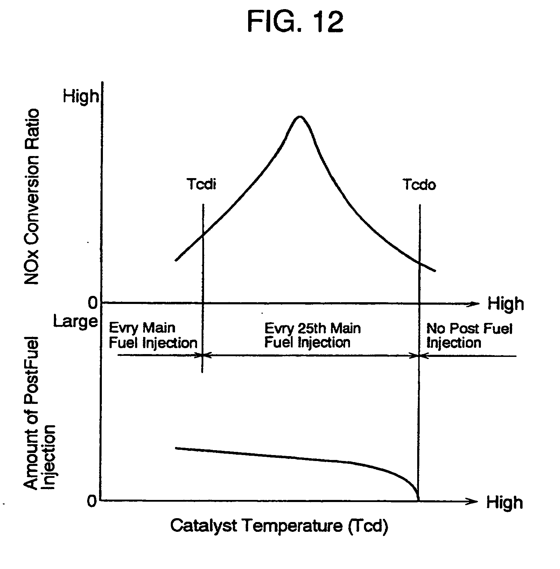

Figure 12 diagrammatically shows the post fuel injection control while the diesel engine operates under ordinary engine operating conditions. As shown, until the catalyst temperature ***Tcd*** of the NOx purifying catalyst 22b, i.e. the downstream catalyst, reaches a lower specified temperature ***Tcdi*** at which the NOx purifying catalyst 22b starts raising its NOx conversion efficiency, the post fuel injection is implemented once every main fuel injection. While the catalyst temperature ***Tcd*** of the NOx purifying catalyst 22b is between the lower specified temperature ***Tcdi*** and a higher specified temperature ***Tcdo*** at which the NOx purifying catalyst 22b shows a specified decrease in NOx conversion efficiency from a peak catalytic activity, i.e. peak NOx conversion efficiency, the post fuel injection is implemented once every 25 main fuel injection. After the catalyst temperature ***Tcd*** of the NOx purifying catalyst 22b has exceeded the higher specified temperature ***Tcdo***, the post fuel injection is interrupted. The amount of post fuel injection is controlled so as to be comparatively high in a region from 3% to 5% of the amount of main fuel injection until the NOx conversion efficiency reaches the peak value. When the catalyst temperature ***Tcd*** of the NOx purifying catalyst 22b exceeds a temperature at which the NOx purifying catalyst 22b shows the peak NOx conversion efficiency, the amount of post fuel injection is controlled to gradually fall with a rise in the catalyst temperature ***Tcd*** of the NOx purifying catalyst 22b. When the catalyst temperature ***Tcd*** of the NOx purifying catalyst 22b exceeds the higher specified temperature ***Tcdo***, the amount of post fuel injection is controlled to be zero, that is, the post fuel injection is interrupted.

As described above, because the post fuel injection is implemented once every main fuel injection until the catalyst temperature ***Tcd*** of the NOx purifying catalyst 22b reaches the lower specified temperature ***Tcdi***, the amount of HC that passes though the oxidation catalyst 22a without being accompanied by an effect of purification is small, so that NOx in exhaust gas upstream is reduced and purified by HC staying in the oxidation catalyst 22a. However, because the post fuel injection is implemented once every 25 main fuel injection when the catalyst temperature ***Tcd*** of the NOx purifying catalyst 22b exceeds the lower specified temperature ***Tcdi***, the amount of HC which is not oxidized in the oxidation catalyst 22a and, in consequence, directed to the NOx purifying catalyst 22b increases. As a result, the NOx purifying catalyst 22b performs efficiency NOx conversion, an NOx emission into the atmosphere declines. Further, when the catalyst temperature ***Tcd*** of the NOx purifying catalyst 22b further rises beyond a temperature at which the NOx purifying catalyst 22b attains the peak NOx conversion efficiency, i.e. the peak catalytic activity, the amount of post fuel injection lowers, so that the NOx purifying catalyst 22b is prevented from causing a sharp decline in catalytic activity due to a rise in catalyst temperature in excess which is caused by heat generated from oxidative reaction of HC.

## Claims

1. An exhaust gas purifying device for an internal combustion engine which comprises a fuel injector (5) which injects fuel directly into a combustion chamber (4) of the internal combustion engine, an exhaust system with a catalyst (22a) having an oxidation catalyzing function of purifying exhaust gas from the internal combustion engine, a temperature sensor (18) operative to monitor a temperature of the catalyst (22a), reduction substance increasing means, increasing an amount of reduction substance in exhaust gas by implementing post fuel injection at a specified point of time in a expansion stroke or an exhaust stroke following main fuel injection timed near a top dead center of a compression stroke, and diagnostic means, implementing said post fuel injection and making a diagnosis of operational abnormality of either one of said catalyst (22a) and said reduction substance increasing means on the basis of a change in said catalyst temperature caused from said post fuel injection while the internal combustion engine operates under a specified operating condition,
**characterized by**
said post fuel injection for making said diagnosis of operational abnormality being implemented at a timing between rotational angles of crankshaft of 30° and 210° after a top dead center of said compression stroke.

2. An exhaust gas purifying device as defined in claim 1, wherein said timing of said post fuel injection for making said diagnosis of operational abnormality is at a rotational angle of crankshaft between 30° and 60° after a top dead center of a compression stroke.

3. An exhaust gas purifying device as defined in claim 1, wherein said timing of said post fuel injection for making said diagnosis of operational abnormality is at a rotational angle of crankshaft between 30° and 90° after a top dead center of said compression stroke and is implemented at injection intervals of 0.2 to 2 seconds.

4. An exhaust gas purifying device as defined claim 3, wherein said timing of said post fuel injection for making said diagnosis of operational abnonnality is at a rotational angle of crankshaft between 50° and 90° after a top dead center of a compression stroke.

5. An exhaust gas purifying device as defined in claim 3, wherein said exhaust system includes a subsidiary catalyst (22b) disposed downstream from said catalyst (22a) and having an oxidation catalyzing function of purifying exhaust gas from the internal combustion engine.

6. An exhaust gas purifying device as defined in claim 1, wherein said timing of said post fuel injection for making said diagnosis of operational abnormality is at a rotational angle of crankshaft between 60° and 210° after a top dead center of said compression stroke and is implemented at injection intervals shorter than 0.2 seconds.

## Patentansprüche

1. Vorrichtung zur Abgasreinigung für einen Verbrennungsmotor, welche umfasst: ein Einspritzventil (5), welches Kraftstoff direkt in einen Brennraum (4) des Verbrennungsmotors einspritzt, eine Abgasanlage mit einem Katalysator (22a) mit einer Oxidationskatalysefunktion der Reinigung von Abgas von dem Verbrennungsmotor, einen Temperaturmessfühler (18) zum Überwachen einer Temperatur des Katalysators (22a), ein die Reduzierungssubstanz erhöhendes Mittel für das Erhöhen einer Menge der Reduzierungssubstanz im Abgas durch Implementieren einer Kraftstoffnacheinspritzung zu einem bestimmten Zeitpunkt während eines Arbeitstakts oder Auspufftakts im Anschluss an die Kraftstoffhaupteinspritzung, welche nahe einem oberen Totpunkt eines Verdichtungstakts angesetzt ist, sowie ein Diagnosemittel, welches die Kraftstoffnacheinspritzung implementiert und eine Diagnose einer Betriebsanomalität des Katalysators (22a) oder des die Reduzierungssubstanz erhöhenden Mittels anhand einer durch die Kraftstoffnacheinspritzung verursachten Änderung der Katalysatortemperatur während des Betriebs des Verbrennungsmotors bei einem festgelegten Betriebszustand erstellt,
**dadurch gekennzeichnet, dass**
die Kraftstoffnacheinspritzung für das Erstellen der Diagnose einer Betriebsanomalität zu einem Zeitpunkt zwischen Kurbelwellen-Drehwinkeln von 30° und 210° nach einem oberen Totpunkt des Verdichtungstakts implementiert wird.

2. Vorrichtung zur Abgasreinigung nach Anspruch 1, **dadurch gekennzeichnet, dass** der Zeitpunkt der Kraftstoffnacheinspritzung für das Erstellen der Diagnose einer Betriebsanomalität bei einem Kurbelwellen-Drehwinkel zwischen 30° und 60° nach einem oberen Totpunkt eines Verdichtungstakts liegt.

3. Vorrichtung zur Abgasreinigung nach Anspruch 1, **dadurch gekennzeichnet, dass** der Zeitpunkt der Kraftstoffnacheinspritzung für das Erstellen der Diagnose einer Betriebsanomalität bei einem Kurbelwellen-Drehwinkel zwischen 30° und 90° nach einem oberen Totpunkt des Verdichtungstakts liegt und bei Einspritzintervallen von 0,2 bis 2 Sekunden implementiert wird.

4. Vorrichtung zur Abgasreinigung nach Anspruch 3, **dadurch gekennzeichnet, dass** der Zeitpunkt der Kraftstoffnacheinspritzung für das Erstellen der Diagnose einer Betriebsanomalität bei einem Kurbelwellen-Drehwinkel zwischen 50° und 90° nach einem oberen Totpunkt eines Verdichtungstakts liegt.

5. Vorrichtung zur Abgasreinigung nach Anspruch 3, **dadurch gekennzeichnet, dass** die Abgasanlage einen stromabwärts des Katalysators (22a) angeordneten Nachkatalysator (22b) umfasst, welcher eine Oxidationskatalysefunktion der Reinigung von Abgas von dem Verbrennungsmotor aufweist.

6. Vorrichtung zur Abgasreinigung nach Anspruch 1, **dadurch gekennzeichnet, dass** der Zeitpunkt der Kraftstoffnacheinspritzung für das Erstellen der Diagnose einer Betriebsanomalität bei einem Kurbelwellen-Drehwinkel zwischen 60° und 210° nach einem oberen Totpunkt eines Verdichtungstakts liegt und bei Einspritzintervallen von weniger als 0,2 Sekunden implementiert wird.

## Revendications

1. Dispositif d'épuration de gaz d'échappement pour un moteur à combustion interne qui comprend un injecteur de combustible (5) qui injecte directement le combustible dans une chambre de combustion (4) du moteur à combustion interne, un système d'échappement doté d'un catalyseur (22a) qui a une fonction de catalyse par oxydation pour épurer les gaz d'échappement du moteur à combustion interne, un capteur de température (18) qui a pour fonction de surveiller la température du catalyseur (22a), un moyen d'augmentation des substances réductrices qui augmente la quantité de substances réductrices dans les gaz d'échappement en réalisant une injection ultérieure de combustible à un moment spécifique de la course de détente ou de la course d'échappement qui suit l'injection principale de combustible synchronisée à proximité du point mort haut de la course de compression et un moyen de diagnostic qui réalise ladite injection ultérieure de combustible et qui effectue un diagnostic d'anomalie de fonctionnement sur ledit catalyseur (22a) ou sur ledit moyen d'augmentation de substances réductrices sur base d'une modification de la température dudit catalyseur entraînée par ladite injection ultérieure de combustible pendant que le moteur à combustion interne travaille dans des conditions de fonctionnement spécifiques,
**caractérisé en ce que**
ladite injection ultérieure de combustible destinée à effectuer le diagnostic d'anomalie de fonctionnement est effectuée en synchronisation avec un angle de rotation du vilebrequin compris entre 30° et 210° après le point mort haut de ladite course de compression.

2. Dispositif d'épuration de gaz d'échappement selon la revendication 1, dans lequel ladite injection ultérieure de combustible destinée à effectuer ledit diagnostic d'anomalie de fonctionnement est réalisée lorsque l'angle de rotation du vilebrequin est compris entre 30° et 60° après le point mort haut de la course de compression.

3. Dispositif d'épuration de gaz d'échappement selon la revendication 1, dans lequel ladite synchronisation de ladite injection ultérieure de combustible destinée à effectuer ledit diagnostic d'anomalie de fonctionnement est réalisée lorsque l'angle de rotation du vilebrequin est compris entre 30° et 90° après le point mort haut de ladite course de compression et à des intervalles d'injection compris entre 0,2 et 2 secondes.

4. Dispositif d'épuration de gaz d'échappement selon la revendication 3, dans lequel ladite synchronisation de ladite injection ultérieure de combustible destinée à effectuer ledit diagnostic d'anomalie de fonctionnement est réalisée lorsque l'angle de rotation du vilebrequin est compris entre 50° et 90° après le point mort haut de la course de compression.

5. Dispositif d'épuration de gaz d'échappement selon la revendication 3, dans lequel ledit système d'échappement comprend un catalyseur auxiliaire (22b) qui est disposé en aval dudit catalyseur (22a) et qui a une fonction de catalyse par oxydation pour épurer les gaz d'échappement dudit moteur à combustion interne.

6. Dispositif d'épuration de gaz d'échappement selon la revendication 1, dans lequel ladite synchronisation de ladite injection ultérieure de combustible destinée à effectuer ledit diagnostic d'anomalie de fonctionnement est réalisée lorsque l'angle de rotation du vilebrequin est compris entre 60° et 210° après le point mort haut de ladite course de compression et à des intervalles d'injection inférieurs à 0,2 secondes.
